(19) Europäisches Patentamt
European Patent Office
Office européen des brevets

(11) **EP 4 686 143 A1**

(12) **EUROPEAN PATENT APPLICATION**

(43) Date of publication:
**28.01.2026 Bulletin 2026/05**

(21) Application number: **25190844.8**

(22) Date of filing: **22.07.2025**

(51) International Patent Classification (IPC):
**H04L 9/08** (2006.01)    **G06F 7/58** (2006.01)
**H04B 10/00** (2013.01)    **G06N 10/20** (2022.01)

(52) Cooperative Patent Classification (CPC):
**H04L 9/0852; G06N 10/20; H04B 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.07.2024 KR 20240096168**

(71) Applicant: **Korea Institute of Science &
Technology
Information
Daejeon 34141 (KR)**

(72) Inventors:
• **Bae, Kwang Il**
  **34141 Daejeon (KR)**
• **Sohn, Il Kwon**
  **35225 Daejeon (KR)**
• **Lee, Won Hyuk**
  **30062 Sejongi-Si (KR)**

(74) Representative: **Glawe, Delfs, Moll
Partnerschaft mbB
Postfach 13 03 91
20103 Hamburg (DE)**

(54) **METHOD AND SYSTEM FOR DETERMINING QUANTUM NONLOCALITY**

(57)    There is provided a method for determining quantum nonlocality, which is performed by a computing system, the method may comprise performing a first projection-valued measurement corresponding to a preset first number by a first node, calculating, by the first node, a probability distribution of obtaining a first output value from the first node and obtaining a second output value from a second node when a first input value is selected from the first node and a second input value is selected from a second node, based on the first projection-valued measurement and determining, by the first node, that there is quantum nonlocality when the calculated probability distribution exceeds a reference value.

FIG. 1

**EP 4 686 143 A1**

**Description**

## BACKGROUND

### Technical Field

The present disclosure relates to a method for determining nonlocality related to quantum mechanics, and more particularly, to a method and system for determining quantum nonlocality using Bell inequality.

### Description of the Related Art

In the field of quantum mechanics, quantum nonlocality may be determined using Bell inequality.

In 2009, Gisin's elegant Bell inequality (so-called EBI) has been suggested. The Bell inequality is characterized in that it is maximally violated by measurements having high symmetry in a their base state and a bi-partite two-dimensional maximally entangled state. In detail, it is known that when measurements of a local system 1 (Alice) are defined by mutually unbiased bases (MUBs) and measurement of a local system 2 (Bob) is defined by symmetric informationally complete bases (SICs), maximal violation is given by the corresponding measurements. This high symmetry is related to quantum cryptography, and thus a device-independent (DI) protocol for verifying the maximum amount of randomness per entanglement distribution by utilizing the quantum nonlocality determination based on the corresponding Bell inequality has been proposed.

However, there is no known result that generalizes the Bell inequality having such high symmetry to high-dimensional quantum systems that are expected to provide information-theoretic advantages.

## SUMMARY

An object of the present disclosure is to provide a method and system for determining quantum nonlocality by using Bell inequality in which the maximum quantum violation is given by mutually unbiased bases and symmetric informationally complete bases.

Another object of the present disclosure is to provide a method and system for determining quantum nonlocality for a high-dimensional quantum system by using less computing resources than conventional ones.

The objects of the present disclosure are not limited to those mentioned above and additional objects of the present disclosure, which are not mentioned herein, will be clearly understood by those skilled in the art from the following description of the present disclosure.

According to an aspect of the present disclosure, there is provided a computing system comprising one or more processors and a memory storing a computer program executed by the one or more processor, wherein the computer program may include instructions for performing a second projection-valued measurement corresponding to a preset second number, calculating a probability distribution of obtaining a first output value from the first node and obtaining a second output value from the second node when a first input value is selected from a first node and a second input value is selected from the second node, based on the second projection-valued measurement and determining that there is quantum nonlocality when the calculated probability distribution exceeds a reference value.

In some embodiments, the reference value may be $30\sqrt{3}$ .

In some embodiments, the calculating a probability distribution may include calculating, by the first node, the probability distribution by using the following equation:

$$\text{(Equation)}$$

$$S(P) = \sum_{x=1}^{8} \sum_{y=0}^{8} \sum_{\alpha,\beta=0}^{2} g_{x,y}^{\alpha,\beta} p(\alpha,\beta|x,y)$$

,

where P is the probability distribution, x is the first input value, y is the second input value, $\alpha$ is the first output value, $\beta$ is the second output value, and $g_{x,y}^{\alpha,\beta}$ is a real number calculated based on the first input value, the second input value, the first output value, and the second output value.

In some embodiments, $g_{x,y}^{\alpha,\beta}$ may be calculated through the following equation:

(Equation)

$$g_{x,y}^{\alpha,\beta} := 2|f^{x,y}|\cos\left[\frac{2\pi}{3}(\alpha+\beta+\nu)\right]$$

$$f^{3r+s,3p+q} = \omega^{-(rq+sp)}f^{3r+s,0}$$

$$\left(f^{1,0},f^{2,0},...,f^{8,0}\right):=\left(\sqrt{3},\ \sqrt{3},\omega^{-3/4},\omega^{5/4},\omega^{1/4}\omega^{-3/4},\omega^{1/4},\omega^{5/4}\right),$$

where $\nu$ is a pre-defined value, and a coefficient $f^{x,y}$ for the first input value x and the second input value y is calculated by substituting $r,\ s,p,\ q \in \{0,1,...,2\}$.

In some embodiments, the calculating a probability distribution may include calculating, by the first node, the probability distribution by using the following equation:

(Equation)

$$S(P) = \sum_{x,y} f^{x,y} E(x,y) + c.c.$$

$$E(x,y) = \sum_{\alpha,\beta=0}^{2} \omega^{n(\alpha+\beta)} p(\alpha\beta|xy),$$

where P is the probability distribution, x is the first input value, y is the second input value, $\alpha$ is the first output value, $\beta$ is the second output value, c.c. is a conjugate complex number of a preceding term, and $\omega^\alpha, \omega^\beta \in \{1,\omega,\omega^2\}$ and $\omega:=e^{2\pi i/3}$ are obtained.

In some embodiments, the computer program may further include instruction for may further comprise, before the performing a first projection-valued measurement, sharing a quantum entanglement state between the first node and the second node.

In some embodiments, $|\psi\rangle$, which is the quantum entangled state, may be $1/\sqrt{3}(|00\rangle+|11\rangle+|22\rangle)$.

In some embodiments, the computer program may further include instruction for calculating a maximum value related to a quantum probability model by using the following equation:

(Equation)

$$S_q = \sum_{x,y} f^{x,y}\langle\psi|A_x \otimes B_y|\psi\rangle + c.c.$$

$$A_x := W_x$$

$$B_y := WB_0 W_y^\dagger$$

$$W_{3m+n} := X^m Z^n$$

$$X := \sum_{\alpha=0}^{2} |\alpha+1\rangle\langle\alpha|$$

$$Z := \sum_{\alpha=0}^{2} \omega^\alpha|\alpha\rangle\langle\alpha|,$$

where $W_j$ ($j=0,1,...,8$) is a Weyl-Heisenberg measurement, and $|3\rangle:=|0\rangle$ is used in the definition of X.

In some embodiments, the first input value may be $x \in \{1, 2, ..., 8\}$, the second input value is $y \in \{0, 1, ..., 8\}$, the first output value is $\alpha \in \{0, 1, 2\}$, and the second output value is $\beta \in \{0, 1, 2\}$.

In some embodiments, the first number may be eight.

BRIEF DESCRIPTION OF THE DRAWINGS

The above and other aspects and features of the present disclosure will become more apparent by describing in detail exemplary embodiments thereof with reference to the attached drawings, in which:

FIG. 1 is a view illustrating a nonlocality determination system according to one embodiment of the present disclosure;

FIG. 2 is a flow chart illustrating a method for determining nonlocality in a computing system according to one embodiment of the present disclosure;

FIG. 3 is a view illustrating a state that a quantum entanglement state is shared between a first node and a second node in accordance with one embodiment of the present disclosure; and

FIG. 4 is a block diagram illustrating a hardware configuration capable of implementing a computing device in various embodiments of the present disclosure.

## DETAILED DESCRIPTION OF THE DISCLOSURE

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

The terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

Embodiments of the present disclosure will hereinafter be described in detail with reference to the accompanying drawings.

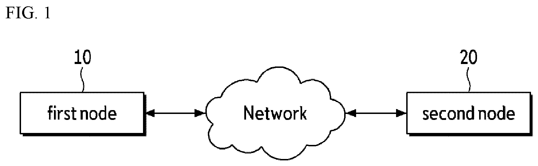

FIG. 1 is a view illustrating a nonlocality determination system according to one embodiment of the present disclosure.

As illustrated in FIG. 1, the nonlocality determination system may include a first node 10 and a second node 20. The first node 10 may be referred to as 'Alice' used as an example when describing Bell inequality, and the second node 20 may be referred to as 'Bob' used as an example when describing the Bell inequality.

Each of the first node 10 and the second node 20 may be implemented as a computing device that includes one or more processors and memories. The first node 10 and the second node 20 may perform communication with each other through a network. The network may include a quantum channel, a mobile communication network, and a wired communication network.

The first node 10 and the second node 20 may share a quantum entanglement state through the network. According to some embodiments, each of the first node 10 and the second node 20 may share the quantum entanglement state by obtaining the quantum entanglement state from a separate storage device.

The first node 10 may perform a first projection-valued measurement corresponding to a first number, and the second node 20 may perform a second projection-valued measurement corresponding to a second number. According to one embodiment, when a first input value is selected from the first node 10 and a second input value is selected from the second node 20, each of the first node 10 and the second node 20 may calculate a probability distribution to obtain a first output value at the first node 10 and obtain a second output value at the second node 20, based on at least one of the first projection-valued measurement or the second projection-valued measurement. In addition, each of the first node 10 and the second node 20 may compare the calculated probability distribution with a reference value to determine quantum nonlocality.

According to one embodiment, each of the first node 10 and the second node 20 may use the Bell inequality to determine nonlocality. When the calculated probability distribution violates the Bell inequality, each of the first node 10 and the second node 20 may determine that there is nonlocality.

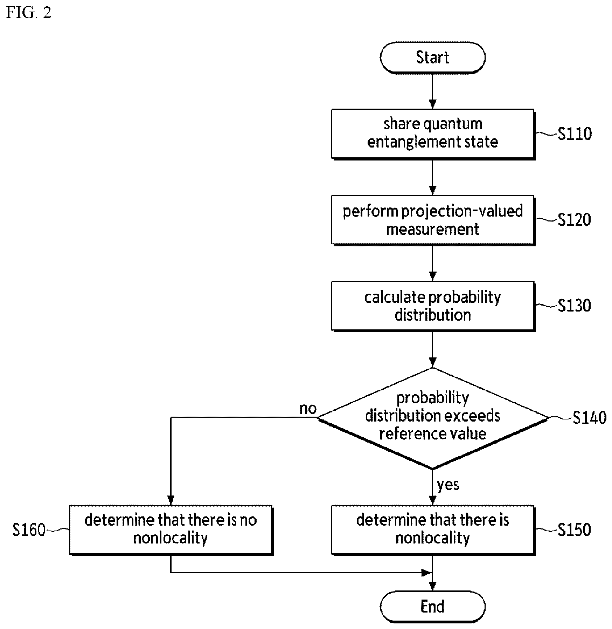

Hereinafter, a method for determining nonlocality and the Bell inequality used to determine nonlocality will be described with reference to FIG. 2.

FIG. 2 is a flow chart illustrating a method for determining nonlocality in a computing system according to one embodiment of the present disclosure.

Referring to FIG. 2, a quantum entanglement state $|\psi\rangle$ may be shared between the first node 10 and the second node 20 (S110). For example, the first node 10 and the second node 20 may share the quantum entanglement state through the network. According to some embodiments, each of the first node 10 and the second node 20 may obtain a quantum entanglement state from a separate storage device, thereby sharing the quantum entanglement state. According to one embodiment, the quantum entanglement state shared between the first node 10 and the second node 20 may be

$$1/\sqrt{3}\left(|00\rangle + |11\rangle + |22\rangle\right).$$

Afterwards, the first node 10 may perform a first number of projection-valued measurements, and the second node 20 may perform a second number of projection-valued measurements (S120). In one embodiment, the first number may be eight, and the second number may be eight. For example, 'x', which is a first input value used for the projection-valued measurement at the first node 10, may belong to a first set {1,2, ..., 8}, and 'y', which is a second input value used for the projection-valued measurement at the second node 20, may belong to a second set {0,1,2, ..., 8}, which may be expressed as follows.

$$x \in \{1,2,...,8\}, \quad y \in \{0,1,...,8\}$$

Each of the measurement at the first node 10 and the measurement at the second node 20 may have any one of three measured values (that is, output values). That is, $\alpha$, which is the first measured value (output value) output from the first node 10, may belong to {0,1,2}, and $\beta$, which is the second measured value (output value) output from the second node 20, may belong to {0,1, 2}, which may be expressed as follows:

$$\alpha, \beta \in \{0,1,2\}$$

$$\omega^{\alpha}, \omega^{\beta} \in \{1, \omega, \omega^2\},$$

where $\omega := e^{2\pi i/3}$ may be expressed.

A Bell test is performed in the above-described measurement situation, so that a probability distribution P may be calculated. That is, when the first input value x is selected from the first node 10 and the second input value y is selected from the second node 20, a probability distribution $P := \{p(\alpha\beta|xy)|\forall \alpha,\beta,x,y\}$ may be calculated to obtain the first output value $\alpha$ from the first node 10 and obtain the second output value $\beta$ from the second node. The probability distribution may be calculated at each of the first node 10 and the second node 20 (S130).

Each of the first node 10 and the second node 20 may determine whether the calculated probability distribution exceeds a reference value (S140). In this case, the reference value may be $30\sqrt{3}$.

When the calculated probability distribution exceeds the reference value $30\sqrt{3}$, the first node 10 may determine that there is nonlocality (S150). Likewise, when the calculated probability distribution exceeds the reference value $30\sqrt{3}$, the second node 20 may determine that there is nonlocality (S150). For example, when at least one of all values related to the calculated probability distribution exceeds the reference value, it may be determined that there is nonlocality.

When the calculated probability distribution is less than or equal to the reference value, the first node 10 may determine that there is no nonlocality (S160). Likewise, when the calculated probability distribution is less than or equal to the reference value, the second node 20 may determine that there is no nonlocality (S160). For example, when all values related to the calculated probability distribution are less than or equal to the reference value, it may be determined that there is no nonlocality.

In addition, when the calculated probability distribution exceeds the reference value $30\sqrt{3}$, it may be determined that the Bell inequality is violated.

A first Bell inequality used in the embodiment of the present disclosure is as follows:

[Equation 1]

$$S(P) = \sum_{x=1}^{8} \sum_{y=0}^{8} \sum_{\alpha,\beta=0}^{2} g_{x,y}^{\alpha,\beta} p(\alpha,\beta|x,y)$$

,

where P is the probability distribution, x is the first input value selected from the first node 10, y is the second input value selected from the second node 20, $\alpha$ is the first output value output from the first node, and $\beta$ may be the second output value output from the second node.

The first Bell inequality related to the Equation 1 may be expressed as a second Bell inequality related to Equation 2 below:

[Equation 2]

$$S(P) = \sum_{x,y} f^{x,y} E(x,y) + c.c.$$

,

where c.c. is a conjugate complex number of the preceding term. In the Equations 1 and 2, P represents a probability distribution, and S(P) may be a function for calculating P.

In addition, E(x,y) in the Equation 2 is an expectation value function, and may be expressed by the following Equation 3:

[Equation 3]

$$E(x,y) = \sum_{\alpha,\beta=0}^{2} \omega^{n(\alpha+\beta)} p(\alpha\beta|xy)$$

,

where $\omega^{\alpha}, \omega^{\beta} \in \{1, \omega, \omega^2\}$, $\omega := e^{2\pi i/3}$ may be obtained.

Probabilities may be obtained experimentally. According to one embodiment, the first node 10 may perform the first projection-valued measurement by randomly selecting an input value from a first input list, and the second node 20 may perform the second projection-valued measurement by randomly selecting an input value from a second input list. The output value output from each of the first node 10 and the second node 20 may be any one of the output values included in the output list.

The first list may include integers from 1 to 8, which may be expressed as $x \in \{1,2,...,8\}$. In addition, the second list may include integers from 0 to 8, which may be expressed as $y \in \{0,1,...,8\}$. In addition, the output list may include integers from 0 to 2, which may be expressed as $\alpha, \beta \in \{0,1,2\}$.

As described above, when a repeated experiment is performed in a state that the range of the input value of the first node 10, the range of the output value of the first node 10, the range of the input value of the second node 20, and the range of the output value of the second node 20 are defined, the probability distribution P may be calculated, in which the first output value $\alpha$ is output from the first node 10 and the second output value $\beta$ is output from the second node 20 when the first node 10 selects the first input value x and the second node 20 selects the second input value y. For example, through a continuous experiment, a first probability, in which '0' is output from the first node 10 and '0' is output from the second node 20 when '1' is selected from the first node 10 and '0' is selected from the second node 20, may be calculated, and a second probability, in which '0' is output from the first node 10 and '0' is output from the second node 20 when '1' is selected from the first node 10 and '1' is selected from the second node 20, may be calculated. In addition, probabilities for situations in other cases may be calculated through repeated experiments, and the probability distribution P may be calculated based on the calculated probability in each case.

According to one embodiment, in order to induce the probability distribution P as a real value, the conjugate complex number c.c. of the preceding term may be introduced into the Equation 2.

Equation 4 may prove that the Equation 1 and the Equation 2 are the same as each other.

[Equation 4]

$$g_{x,y}^{\alpha,\beta} := 2|f^{x,y}|\cos\left[\frac{2\pi}{3}(\alpha+\beta+\nu)\right]$$

In the Equations 2 and 4, $f^{x,y}$ represents a coefficient, and may be expressed as follows:

$$f^{x,y} = |f^{x,y}|\omega^{\nu},$$

where '$\omega$' is a value related to measurement, and each measurement has three measured values and may be expressed as $\omega^{\alpha},\omega^{\beta} \in \{1,\omega,\omega^2\}$. In this case, $\alpha,\beta \in \{0,1,2\}$ and $\omega := e^{2\pi i/3}$ may be obtained. '$\nu$' may be calculated based on $f^{x,y}$, $|f^{x,y}|$, and $\omega$.

In addition, $f^{x,y} = |f^{x,y}|\omega^{\nu}$ may be expressed by Equation 5 below.

[Equation 5]

$$f^{3r+s,3p+q} = \omega^{-(rq+sp)}f^{3r+s,0}$$

In the Equation 5, {0,1,...,2} is substituted for each of variables r,s,p,q, so that $f^{x,y}$ for the first input value x and the second input value y may be calculated, which may be expressed by Equation 6.

[Equation 6]

$$\left(f^{1,0}, f^{2,0}, ..., f^{8,0}\right) := \left(\sqrt{3}, \sqrt{3}, \omega^{-3/4}, \omega^{5/4}, \omega^{1/4}\omega^{-3/4}, \omega^{1/4}, \omega^{5/4}\right)$$

A right-hand side $f^{3r+s,0}$ of the Equation 4 may be derived from the Equation 5.

In addition, in the Equation 2, the expectation value E(x, y) may be expressed by Equation 7 below:

[Equation 7]

$$E(x,y) = \langle\psi|A_x \otimes B_y|\psi\rangle,$$

where $A_x$ denotes the (x)th measurement of the first node 10, and $B_y$ denotes the (y)th measurement of the second node 20.

Substituting the quantum expectation value E(x, y) into the Equation 2, the upper limit of S, which may be theoretically obtained, may be calculated as $36\sqrt{3}$. Also, 'S' may be calculated through Equation 8 below.

[Equation 8]

$$S_q = \sum_{x,y} f^{x,y} \langle \psi | A_x \otimes B_y | \psi \rangle + c.c.$$

However, since the upper limit of the Equation 8 is greater than the reference value $36\sqrt{3}$ related to the Equations 1 and 2 related to the Bell inequality, the use of quantum mechanics may violate the Bell inequality (the Equations 1 and 2).

The measurement and state for satisfying the violation condition, that is, an inequality sign of Equation 8, may be expressed by Equation 9 below:

[Equation 9]

$$A_x := W_x$$

$$B_y := W B_0 W_y^\dagger$$

$$W_{3m+n} := X^m Z^n$$

$$X := \sum_{\alpha=0}^{2} |\alpha+1\rangle\langle\alpha|$$

$$Z := \sum_{\alpha=0}^{2} \omega^\alpha |\alpha\rangle\langle\alpha| \quad ,$$

where $W_j$ ($j = 0,1,...,8$) is a Weyl-Heisenberg measurement, and $|3\rangle := |0\rangle$ may be used in the definition of X.

According to some embodiments, each of the first node 10 and the second node 20 may calculate a maximum value related to a quantum probability model by using the Equation 9.

The measurements of the second node 20 are obtained from $B_0$ as expressed by the Equation 9, and $B_0$ may be expressed as Equation 10.

[Equation 10]

$$B_0 = \begin{pmatrix} 1, & 0, & 0 \\ 0, & -1/2, & i\sqrt{3}/2 \\ 0, & i\sqrt{3}/2, & -1/2 \end{pmatrix}$$

Substituting the quantum entanglement state shared between the first node 10 and the second node 20 and the measurement related to the Equation 9 into the Equation 8, the upper limit $36\sqrt{3}$ may be calculated.

$A_1 = Z$, $A_3 = X$, $A_4 = XZ$, $A_5 = XZ^2$ is obtained from $A_x := W_x$ related to the Equation 9, and a measurement base for these measurements may be a set of four mutually unbiased bases (MUBs).

Upon reviewing a measurement base of nine measurements of $B_y := W B_0 W_y^\dagger$ related to the Equation 10, it is noted that symmetric informationally complete bases (SICs) induced to a state $|\varphi\rangle := 1/\sqrt{2}(|1\rangle - |2\rangle)$ defines nine measurement base states. Accordingly, it may be proved that the measurement bases of the first node 10 and the second node 20 are given to MUBs and SICs, respectively.

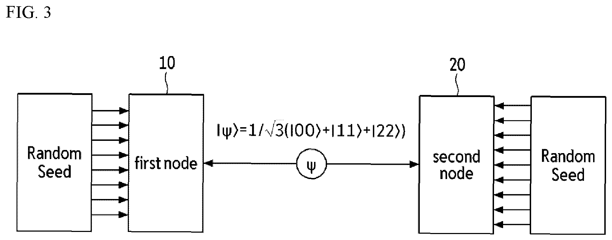

FIG. 3 is a view illustrating a state that a quantum entanglement state is shared between a first node 10 and a second node 20 in accordance with one embodiment of the present disclosure.

As shown in FIG. 3, the quantum entanglement state may be shared in advance. The first node 10 and the second node 20 may share the quantum entanglement state with each other in advance through the network, or the quantum entanglement state may be stored in each of the first node 10 and the second node 20 during shipment, or the quantum entanglement state may be registered in each of the first node 10 and the second node 20 through a storage means.

Based on the quantum entanglement state, the maximum value $36\sqrt{3}$ related to the quantum probability model may be calculated from each of the first node 10 and the second node 20.

As illustrated in FIG. 3, the first node 10 may perform a first projection-valued measurements corresponding to the first number, and the second node 20 may perform a second projection-valued measurements corresponding to the second number. As illustrated in FIG. 3, the first number may be eight and the second number may be nine.

The first node 10 may perform the first projection-valued measurement based on a value randomly obtained through a random seed. Similarly, the second node 20 may perform the second projection-valued measurement based on the value randomly obtained through the random seed.

According to the embodiments of the present disclosure, the Bell inequality proposed through the Equation 1 or the Equation 2 may utilize a three-dimensional quantum system, which is a higher dimension than the existing two-dimensional quantum system-based Gisin's Elephant Bell quality (EBI). Accordingly, according to the present embodiment, the Bell inequality, which is an important element technology of DI quantum encryption protocol that guarantees a high level of security, may be newly induced in three dimensions while maintaining violation characteristic having high symmetry as in the case of EBI.

In addition, according to the present embodiments, the number of measurements that should be performed to determine the violation of the Bell inequality is less than the Bell inequality [Sci. Adv. 2021; 7: eabc3847], which is maximally violated by the existing SICs. Accordingly, the method according to the present embodiments may determine nonlocality for a multi-dimensional system more quickly by using less computing resources.

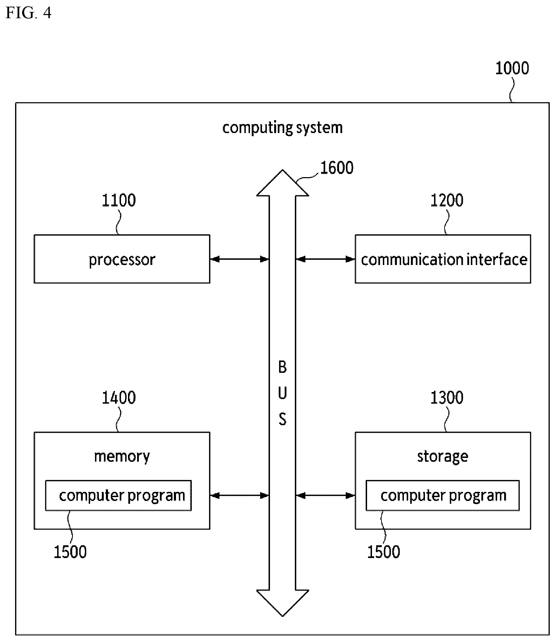

Hereinafter, a hardware configuration of an exemplary computing system according to some embodiments will be described with reference to FIG. 4.

FIG. 4 is a hardware configuration view of an exemplary computing system 1000 according to some embodiments of the present disclosure. The computing system 1000 may include at least one processor 1100, a bus 1600, a communication interface 1200, a memory 1400, which loads a computer program 1500 to be executed by the processor 1100, and a storage 1300, which stores the computer program 1500.

The computing system 1000 illustrated in FIG. 4 may include at least one of the first node 10 and the second node 20 illustrated in FIG. 1 and FIG. 3. Only components related to the embodiment are illustrated in FIG. 4. Accordingly, a person skilled in the art to which the embodiments of the present disclosure may recognize that other general components may be included in addition to the components illustrated in FIG. 4.

The processor 1100 may control the overall operation of each of the components of the computing system 1000. The processor 1100 may be configured to include at least one of a central processing unit (CPU), a micro-processor unit (MPU), a microcontroller unit (MCU), a graphics processing unit (GPU), or any form of processor well-known in the field of the present disclosure. Additionally, the processor 1100 may perform computations for at least one application or program to execute operations/methods according to some embodiments of the present disclosure. The computing system 1000 may be equipped with one or more processors.

The memory 1400 may store various data, commands, and/or information. The memory 1400 may load the computer program 1500 from the storage 1300 to execute the operations/methods according to some embodiments of the present disclosure. The memory 1400 may be implemented as a volatile memory such as a random-access memory (RAM), but the present disclosure is not limited thereto.

The bus 1600 may provide communication functionality between the components of the computing system 1000. The bus 1600 may be implemented in various forms such as an address bus, a data bus, and a control bus. The communication interface 1200 may be connected to a communication network. The storage 1300 may non-transitorily store at least one computer program 1500. The storage 1300 may be configured to include a nonvolatile memory such as a flash memory, as well as a computer-readable recording medium in any form well-known in the technical field of the present disclosure, such as a hard disk or a removable disk.

The computer program 1500 may include one or more instructions that enable the processor 1100 to perform the operations/methods according to various embodiments of the present disclosure when loaded into the memory 1400. In other words, by executing the loaded instructions, the processor 1100 may perform the operations/methods according to various embodiments of the present disclosure. The computer program 1500 may include instructions for methods according to various embodiments described with reference to FIGS. 1 to 3.

According to one embodiment, the computer program 1500 may include instructions for operations of performing a first projection-valued measurement corresponding to a preset first number by a first node, calculating, by the first node, a probability distribution of obtaining a first output value from the first node and obtaining a second output value from a second node when a first input value is selected from the first node and a second input value is selected from a second node, based on the first projection-valued measurement and determining, by the first node, that there is quantum nonlocality when the calculated probability distribution exceeds a reference value.

Additionally or alternatively, the computer program 1500 may include instructions for operations of performing a second projection-valued measurement corresponding to a preset second number by a second node, calculating, by the second node, a probability distribution of obtaining a first output value from the first node and obtaining a second output value from the second node when a first input value is selected from a first node and a second input value is selected from the second node, based on the second projection-valued measurement and determining, by the second node, that there is quantum nonlocality when the calculated probability distribution exceeds a reference value.

In some embodiments, the computing system 1000 as described with reference to FIG. 4 may be configured using one or more physical servers included in a server farm based on cloud technology such as virtual machines. In this case, at least some of the components as illustrated in FIG. 4, such as the processor 1100, the memory 1400, and the storage 1300 may be virtual hardware, and the communication interface 1200 may also be embodied as a virtualized networking element such as a virtual switch.

So far, a variety of embodiments of the present disclosure and the effects according to embodiments thereof have been mentioned with reference to FIGS. 1 to 4. The effects according to the technical idea of the present disclosure are not limited to the forementioned effects, and other unmentioned effects may be clearly understood by those skilled in the art from the description of the specification.

The methods according to the embodiments of the present disclosure described above may be performed by executing a computer program implemented using a computer-readable code. The computer program may be transmitted from a first computing device to a second computing device via a network such as the Internet and installed on the second computing device, and may be used by the second computing device. Furthermore, although the operations are illustrated in a specific order in the drawings, it should not be understood that the operations should be executed in the specific order as illustrated or in a sequential order or that all illustrated operations should be executed to acquire a desired result. In certain situations, multitasking and parallel processing may be advantageous.

Although some embodiments of the present disclosure have been described above with reference to the accompanying drawings, the present disclosure may not be limited to some embodiments and may be implemented in various different forms. Those of ordinary skill in the technical field to which the present disclosure belongs will be able to appreciate that the present disclosure may be implemented in other specific forms without changing the technical idea or essential features of the present disclosure. Therefore, it should be understood that some embodiments as described above are not restrictive but illustrative in all respects.

## Claims

1. A method for determining quantum nonlocality, which is performed by a computing system, the method comprising:

   performing a first projection-valued measurement corresponding to a preset first number by a first node;
   calculating, by the first node, a probability distribution of obtaining a first output value from the first node and obtaining a second output value from a second node when a first input value is selected from the first node and a second input value is selected from a second node, based on the first projection-valued measurement; and
   determining, by the first node, that there is quantum nonlocality when the calculated probability distribution exceeds a reference value.

2. The method of claim 1, wherein the reference value is $30\sqrt{3}$.

3. The method of claim 1, wherein the calculating a probability distribution includes calculating, by the first node, the probability distribution by using the following equation:

   (Equation)

   $$S(P) = \sum_{x=1}^{8} \sum_{y=0}^{8} \sum_{\alpha,\beta=0}^{2} g_{x,y}^{\alpha,\beta} p(\alpha,\beta|x,y)$$
   
   ,

   where P is the probability distribution, x is the first input value, y is the second input value, $\alpha$ is the first output value, $\beta$ is

the second output value, and $g_{x,y}^{\alpha,\beta}$ is a real number calculated based on the first input value, the second input value, the first output value, and the second output value.

4. The method of claim 3, wherein $g_{x,y}^{\alpha,\beta}$ is calculated through the following equation:

(Equation)

$$g_{x,y}^{\alpha,\beta} := 2|f^{x,y}|\cos\left[\frac{2\pi}{3}(\alpha+\beta+\nu)\right]$$

$$f^{3r+s,3p+q} = \omega^{-(rq+sp)}f^{3r+s,0}$$

$$\left(f^{1,0},f^{2,0},...,f^{8,0}\right) := \left(\sqrt{3},\ \sqrt{3},\omega^{-3/4},\omega^{5/4},\omega^{1/4}\omega^{-3/4},\omega^{1/4},\omega^{5/4}\right),$$

where $\nu$ is a pre-defined value, and a coefficient $f^{x,y}$ for the first input value x and the second input value y is calculated by substituting $r,\ s,p,q \in \{0,1,...,2\}$.

5. The method of claim 1, wherein the calculating a probability distribution includes calculating, by the first node, the probability distribution by using the following equation:

(Equation)

$$S(P) = \sum_{x,y} f^{x,y}E(x,y) + c.c.$$

$$E(x,y) = \sum_{\alpha,\beta=0}^{2} \omega^{n(\alpha+\beta)}p(\alpha\beta|xy),$$

where P is the probability distribution, x is the first input value, y is the second input value, $\alpha$ is the first output value, $\beta$ is the second output value, c.c. is a conjugate complex number of a preceding term, and $\omega^{\alpha},\omega^{\beta} \in \{1,\omega,\omega^2\}$ and $\omega := e^{2\pi i/3}$ are obtained.

6. The method of claim 1, further comprising, before the performing a first projection-valued measurement, sharing a quantum entanglement state between the first node and the second node.

7. The method of claim 6, wherein $|\psi\rangle$, which is the quantum entanglement state, is $1/\sqrt{3}(|00\rangle+|11\rangle+|22\rangle)$.

8. The method of claim 7, further comprising calculating a maximum value related to a quantum probability model by using the following equation:

(Equation)

$$S_q = \sum_{x,y} f^{x,y} \langle \psi | A_x \otimes B_y | \psi \rangle + c.c.$$

$$A_x := W_x$$

$$B_y := W B_0 W_y^{\dagger}$$

$$W_{3m+n} := X^m Z^n$$

$$X := \sum_{\alpha=0}^{2} |\alpha+1\rangle\langle\alpha|$$

$$Z := \sum_{\alpha=0}^{2} \omega^{\alpha} |\alpha\rangle\langle\alpha| \quad,$$

where $W_j$ ($j = 0,1,...,8$) is a Weyl-Heisenberg measurement, and $|3\rangle := |0\rangle$ is used in the definition of X.

9. The method of claim 1, wherein the first input value is $x \in \{1,2,...,8\}$, the second input value is $y \in \{0,1,...,8\}$, the first output value is $a \in \{0,1,2\}$, and the second output value is $\beta \in \{0, 1, 2\}$.

10. The method of claim 1, wherein the first number is eight.

11. A computing system comprising:

   one or more processors; and
   a memory storing a computer program executed by the one or more processor,
   wherein the computer program includes instructions for
   performing a second projection-valued measurement corresponding to a preset second number;
   calculating a probability distribution of obtaining a first output value from the first node and obtaining a second output value from the second node when a first input value is selected from a first node and a second input value is selected from the second node, based on the second projection-valued measurement; and
   determining that there is quantum nonlocality when the calculated probability distribution exceeds a reference value.

12. The computing system of claim 11, wherein the calculating a probability distribution includes calculating, by the second node, the probability distribution by using the following equation:

(Equation)

$$S(P) = \sum_{x=1}^{8} \sum_{y=0}^{8} \sum_{\alpha,\beta=0}^{2} g_{x,y}^{\alpha,\beta} p(\alpha,\beta|x,y) \quad,$$

where P is the probability distribution, x is the first input value, y is the second input value, $\alpha$ is the first output value, $\beta$ is the second output value, and $g_{x,y}^{\alpha,\beta}$ is a real number calculated based on the first input value, the second input value, the first output value, and the second output value.

13. The computing system of claim 12, wherein $g_{x,y}^{\alpha,\beta}$ is calculated through the following equation:

(Equation)

$$g_{x,y}^{\alpha,\beta} := 2|f^{x,y}|\cos\left[\frac{2\pi}{3}(\alpha+\beta+\nu)\right]$$

$$f^{3r+s,3p+q} = \omega^{-(rq+sp)}f^{3r+s,0}$$

$$\left(f^{1,0},f^{2,0},\ldots,f^{8,0}\right):=\left(\sqrt{3},\ \sqrt{3},\omega^{-3/4},\omega^{5/4},\omega^{1/4}\omega^{-3/4},\omega^{1/4},\omega^{5/4}\right),$$

where $\nu$ is a value pre-defined from $f^{x,y}=|f^{x,y}|\omega^{\nu}$, and a coefficient $f^{x,y}$ for the first input value x and the second input value y is calculated by substituting $r,\ ,s,p,\ q\in\{0,1,\ldots,2\}$.

14. The computing system of claim 11, wherein the calculating a probability distribution includes calculating the probability distribution by using the following equation:

(Equation)

$$S(P) = \sum_{x,y} f^{x,y}E(x,y) + c.c.$$

$$E(x,y) = \sum_{\alpha,\beta=0}^{2} \omega^{n(\alpha+\beta)}p(\alpha\beta|xy),$$

where P is the probability distribution, x is the first input value, y is the second input value, $\alpha$ is the first output value, $\beta$ is the second output value, c.c. is a conjugate complex number of a preceding term, and $\omega^{\alpha},\omega^{\beta}\in\{1,\omega,\omega^2\}$ and $\omega:=e^{2\pi i/3}$ are obtained.

15. The computing system of claim 11, wherein the first input value is $x\in\{1,2,\ldots,8\}$, the second input value is $y\in\{0,1,\ldots,8\}$, the first output value is $\alpha\in\{0,1,2\}$, and the second output value is $\beta\in\{0,1,2\}$.

FIG. 1

FIG. 2

```
                              ┌──────────┐
                              │  Start   │
                              └────┬─────┘
                                   │
                                   ▼
                       ┌─────────────────────────┐
                       │   share quantum          │──── S110
                       │   entanglement state     │
                       └────────────┬─────────────┘
                                    │
                                    ▼
                       ┌─────────────────────────┐
                       │  perform projection-valued│──── S120
                       │  measurement             │
                       └────────────┬─────────────┘
                                    │
                                    ▼
                       ┌─────────────────────────┐
                       │  calculate probability   │──── S130
                       │  distribution            │
                       └────────────┬─────────────┘
                                    │
                                    ▼
                              ◇─────────────◇
                    no       │  probability  │
              ◄──────────────│ distribution exceeds │──── S140
              │              │  reference value │
              │               ◇─────────────◇
              │                      │ yes
              ▼                      ▼
  ┌────────────────────────┐  ┌────────────────────────┐
  │ determine that there is no│ │ determine that there is │──── S150
  │  nonlocality           │  │  nonlocality            │
  └───────────┬────────────┘  └────────────┬───────────┘
  S160                                      │
              └──────────────────►──────────┤
                                            ▼
                                      ┌──────────┐
                                      │   End    │
                                      └──────────┘
```

FIG. 3

$|\psi\rangle = 1/\sqrt{3}(|00\rangle + |11\rangle + |22\rangle)$

FIG. 4

## EUROPEAN SEARCH REPORT

**Application Number**

EP 25 19 0844

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OLE ANDERSSON ET AL: "Device-independent certification of two bits of randomness from one entangled bit and Gisin's elegant Bell inequality", ARXIV.ORG, CORNELL UNIVERSITY LIBRARY, 201 OLIN LIBRARY CORNELL UNIVERSITY ITHACA, NY 14853, 3 July 2017 (2017-07-03), XP081306332, DOI: 10.1103/PHYSREVA.97.012314 * sections III, IV and Figure 1 * | 1-15 | INV. H04L9/08 G06F7/58 H04B10/00 G06N10/20 |
| X | CHEN-XI LIU ET AL: "Experimental realization of more quantum randomness generation based on non-projective measurement", JOURNAL OF PHYSICS B, ATOMIC MOLECULAR AND OPTICAL PHYSICS, INSTITUTE OF PHYSICS PUBLISHING, BRISTOL, GB, vol. 52, no. 14, 27 June 2019 (2019-06-27), page 145501, XP020341581, ISSN: 0953-4075, DOI: 10.1088/1361-6455/AB16A4 [retrieved on 2019-06-27] * sections 3, 4 * | 1-15 | |
| X | DYLAN J SAUNDERS ET AL: "Paper;The simplest demonstrations of quantum nonlocality;The simplest demonstrations of quantum nonlocality", NEW JOURNAL OF PHYSICS, INSTITUTE OF PHYSICS PUBLISHING, BRISTOL, GB, vol. 14, no. 11, 15 November 2012 (2012-11-15), page 113020, XP020231679, ISSN: 1367-2630, DOI: 10.1088/1367-2630/14/11/113020 * sections 3-5 * | 1-15 | **TECHNICAL FIELDS SEARCHED (IPC)** H04L H04B G06F G06N |

The present search report has been drawn up for all claims

| Place of search | Date of completion of the search | Examiner |
|---|---|---|
| Munich | 2 December 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)